# EUROPEAN PATENT APPLICATION

(11) **EP 4 546 234 A1**
(43) Date of publication of application: **30.04.2025**
(21) Application number: 24204011.1
(22) Date of filing: 01.10.2024
(51) Int. Cl.: G06Q 10/0639, A47F 10/06, B64D 11/00, G06Q 50/10, G06Q 50/12, G06V 20/68, G09B 19/00

(54) **FOOD QUALITY AND PREFERENCE FEEDBACK**

(30) Priority: 27.10.2023 IN 202341073228; 02.01.2024 US 202418402257
(71) Applicant: B/E Aerospace, Inc., Winston-Salem, NC 27105 (US)
(72) Inventor: VEERAYYA, Shivashankar Maddanimath, Bangalore (IN)
(74) Representative: Dehns

(57) **Abstract**

A system for obtaining feedback regarding food served to passengers is disclosed. The system includes a detection device (304, 404) and a controller (406). The controller (406) is configured to capture a plurality of images of food of a food plate from the detection device (304, 404), classify the food on the food plate, responsive to the food plate being removed from view of the detection device (304, 404), determine, using a prior received image, whether the food is mostly consumed, partially consumed, or mostly unconsumed, responsive to determining that the food was either mostly consumed, partially consumed, or mostly unconsumed, store, in a memory, information pertaining to the food along with a record of the food being either mostly consumed, partially consumed, or mostly unconsumed as per the determination, and transmit the information to at least one other computer in order for modifications to be made to menus and food quality as per the information.

## Description

### CROSS-REFERENCE TO RELATED APPLICATIONS

This application claims priority to, and the benefit of, India Provisional Patent Application No. 202341073228, filed October 27, 2023 and titled "FOOD QUALITY AND PREFERENCE FEEDBACK," (DAS Code 38CE).

### FIELD

The present disclosure relates to systems and methods for monitoring in-flight services, and more specifically, to using food quality and preference feedback to improve in- flight food service.

### BACKGROUND

Passengers who travel first class and business class pay a premium for their seat and expect exceptional service. Typically, food preferences are very personal to each passenger such that a food dish liked by one passenger may not be liked by another passenger. Feedback on a particular food dish may or may not be provided by passengers to a flight crew member; however, the flight crew member may or may not pass the feedback on. Over time, in order to stay competitive, it has become important for airlines to revisit the passenger feedback and understand them better. With the advancement in technology, customers expect to have a more ensured method to provide their feedback.

### SUMMARY

Disclosed herein is a system for obtaining feedback regarding food served to passengers. The system includes a detection device and a controller. The controller is configured to capture a plurality of images of food of a food plate from the detection device and classify the food on the food plate. The controller is configured to, responsive to the food plate being removed from view of the detection device, determine, using a prior received image, whether the food is mostly consumed, partially consumed, or mostly unconsumed. The controller is configured to, responsive to determining that the food was either mostly consumed, partially consumed, or mostly unconsumed, store, in a memory, information pertaining to the food along with a record of the food being either mostly consumed, partially consumed, or mostly unconsumed as per the determination. The controller is configured to transmit the information to at least one other computer in order for modifications to be made to menus and food quality as per the information.

In various embodiments, the system further includes an entertainment system. In various embodiments, the controller is configured to, prior to capturing the plurality of images of the food of the food plate from the detection device, prompt, via the entertainment system, a passenger associated with the detection device for a response as to whether the passenger would like to participate in a food quality assessment and, responsive to the passenger indicating a willingness to participate in the food quality assessment, capture the plurality of images of the food of the food plate from the detection device.

In various embodiments, the controller is configured to, responsive to the food being either partially consumed or mostly unconsumed, prompt the passenger, via the entertainment system, for additional information pertaining to another food, other than the food the passenger received, that the passenger would have preferred. In various embodiments, the controller is configured to, responsive to the food being either partially consumed or mostly unconsumed, prompt the passenger, via the entertainment system, for further information pertaining to a citizenship, a nationality, and/or ethnicity of the passenger. In various embodiments, the controller is configured to transmit the additional information and the further information to the at least one other computer in order for modifications to be made to the menus and the food quality as per the additional information and the further information.

In various embodiments, the detection device only captures the plurality of images of the food of the food plate in response to the detection device determining a presence of the food plate proximate to a passenger. In various embodiments, the presence of the food plate is determined by a camera or detecting a radio frequency identification (RFID) tag on the food plate. In various embodiments, the controller is configured to classify the food on the food plate by comparing the plurality of images to images stored in the memory, by using computer vision software or deep learning models that are trained to identify various food that is served to passengers, or by using pattern recognition. In various embodiments, the detection device is at least one of a camera or a radio frequency identification (RFID) reader. In various embodiments, the controller is further configured to perform statistical analysis using the information prior to transmitting the information to the at least one other computer in order for modifications to be made to the menus and the food quality as per the information and transmit statistics associated with the statistical analysis to the at least one other computer in order for modifications to be made to the menus and the food quality as per the information and the statistics.

Also disclosed herein is a method for obtaining feedback regarding food served to passengers. The method includes capturing, by a controller, a plurality of images of food of a food plate from a detection device and classifying, by the controller, the food on the food plate. The method includes, responsive to the food plate being removed from view of the detection device, determine, by the controller and using a prior received image, whether the food is mostly consumed, partially consumed, or mostly unconsumed. The method includes, responsive to determining that the food was either mostly consumed, partially consumed, or mostly unconsumed, storing, by the controller and in a memory, information pertaining to the food along with a record of the food being either mostly consumed, partially consumed, or mostly unconsumed as per the determination. The method includes transmitting, by the controller, the information to at least one other computer in order for modifications to be made to menus and food quality as per the information.

In various embodiments, the method further includes, prior to capturing the plurality of images of the food of the food plate from the detection device, prompting, by the controller and via an entertainment system, a passenger associated with the detection device for a response as to whether the passenger would like to participate in a food quality assessment. In various embodiments, the method further includes, responsive to the passenger indicating a willingness to participate in the food quality assessment, capturing, by the controller, the plurality of images of the food of the food plate from the detection device.

In various embodiments, the method further includes, responsive to the food being either partially consumed or mostly unconsumed, prompting, by the controller and via the entertainment system, the passenger for additional information pertaining to another food, other than the food the passenger received, that the passenger would have preferred. In various embodiments, the method further includes, responsive to the food being either partially consumed or mostly unconsumed, prompting, by the controller and via the entertainment system, the passenger for further information pertaining to a citizenship, a nationality, and/or ethnicity of the passenger. In various embodiments, the method further includes transmitting, by the controller, the additional information and the further information to the at least one other computer in order for modifications to be made to the menus and the food quality as per the additional information and the further information.

In various embodiments, the detection device only captures the plurality of images of the food of the food plate in response to the detection device determining a presence of the food plate proximate to a passenger. In various embodiments, the presence of the food plate is determined by a camera or by detecting a radio frequency identification (RFID) tag on the food plate. In various embodiments, the method further includes classifying, by the controller, the food on the food plate by comparing the plurality of images to images stored in the memory, by using computer vision software or deep learning models that are trained to identify various food that is served to passengers, or by using pattern recognition. In various embodiments, the detection device is at least one of a camera or a radio frequency identification (RFID) reader. In various embodiments, the method further includes performing, by the controller, statistical analysis using the information prior to transmitting the information to the at least one other computer in order for modifications to be made to the menus and the food quality as per the information and transmitting, by the controller, statistics associated with the statistical analysis to the at least one other computer in order for modifications to be made to the menus and the food quality as per the information and the statistics.

The foregoing features and elements may be combined in any combination, without exclusivity, unless expressly indicated herein otherwise. These features and elements as well as the operation of the disclosed embodiments will become more apparent in light of the following description and accompanying drawings.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the following detailed description and claims in connection with the following drawings. While the drawings illustrate various embodiments employing the principles described herein, the drawings do not limit the scope of the claims.
FIG. 1 illustrates an aircraft and various sections within the aircraft, in accordance with various embodiments.
FIG. 2 illustrates a cabin of an aircraft, in accordance with various embodiments.
FIG. 3 illustrates a passenger seat with a detection device and an entertainment system for use in a cabin of an aircraft, in accordance with various embodiments.
FIG. 4 illustrates a food quality and preference feedback system for obtaining feedback regarding food served to passengers, in accordance with various embodiments.
FIG. 5 illustrates a method for obtaining feedback regarding food served to passengers, in accordance with various embodiments.

### DETAILED DESCRIPTION

The following detailed description of various embodiments herein makes reference to the accompanying drawings, which show various embodiments by way of illustration. While these various embodiments are described in sufficient detail to enable those skilled in the art to practice the disclosure, it should be understood that other embodiments may be realized and that changes may be made without departing from the scope of the disclosure. Thus, the detailed description herein is presented for purposes of illustration only and not of limitation. Furthermore, any reference to singular includes plural embodiments, and any reference to more than one component or step may include a singular embodiment or step. Also, any reference to attached, fixed, connected, or the like may include permanent, removable, temporary, partial, full or any other possible attachment option. Additionally, any reference to without contact (or similar phrases) may also include reduced contact or minimal contact. It should also be understood that unless specifically stated otherwise, references to "a," "an," or "the" may include one or more than one and that reference to an item in the singular may also include the item in the plural. Further, all ranges may include upper and lower values and all ranges and ratio limits disclosed herein may be combined.

Typically, feedback on a particular food dish served to a passenger may or may not be provided by passengers to a flight crew member. Further, any feedback from a passenger on a particular food dish that is provided to a flight crew member may or may not be passed to the appropriate personnel or system at an airline. Over time, in order to stay competitive, it is important for airlines to accurately and reliably capture passenger feedback to understand passenger preferences better as well as to adjust product and service offerings.

Disclosed herein is a system and method for using obtaining feedback regarding food served to passengers. In various embodiments, one or more detection devices, such as a camera, associated with one or more passengers, continuously captures input associated with a food plate that is positioned in proximity to the passenger. In various embodiments, a food quality and preference feedback system received the images and/or other data, identifies one or more of a meat, i.e. beef or chicken, among others, fish, pasta, salad or vegetable, and/or bread, among others using image classification, such as via a computer vision system and/or a deep-learning neural network, which detect different food dishes. In various embodiments, as the passenger eats the food on the food dish, the food quality and preference feedback system keeps track whether the food is partially eaten, completely uneaten, or completely eaten by each passenger. If the passenger does not finish the food or if the food is completely uneaten, the food quality and preference feedback system may request feedback from the passenger via an entertainment system associated with the passenger which other food dish the passenger may have preferred instead. In various embodiments, the feedback request may also request the passenger provide information pertaining to a citizenship, a nationality, and/or ethnicity of the passenger. In various embodiments, the food quality and preference feedback system may utilize the data obtained from the one or more detection devices and/or from the entertainment system to determine whether a particular food dish should be replaced or whether more food options should be provided. In various embodiments, the food quality and preference feedback system may provide a break down with regard to main courses, i.e. beef, chicken, fish, or pasta, among others, the various sides, i.e. salad or vegetables, or the breads, among others. In various embodiments, the food quality and preference feedback system may provide a break down based on food as well as a citizenship, a nationality, and/or ethnicity of the passenger. In that regard, the food quality and preference feedback system may provide and an indication of a food dish and as to whether the food dish is preferred or not preferred for passengers with particular citizenship, nationality, and/or ethnicity. In various embodiments, the food quality and preference feedback system stores the information and conveys the information to the airline once the aircraft has landed without intervention from flight crew members so that ground staff may make modifications to menus and food preparation and/or quality.

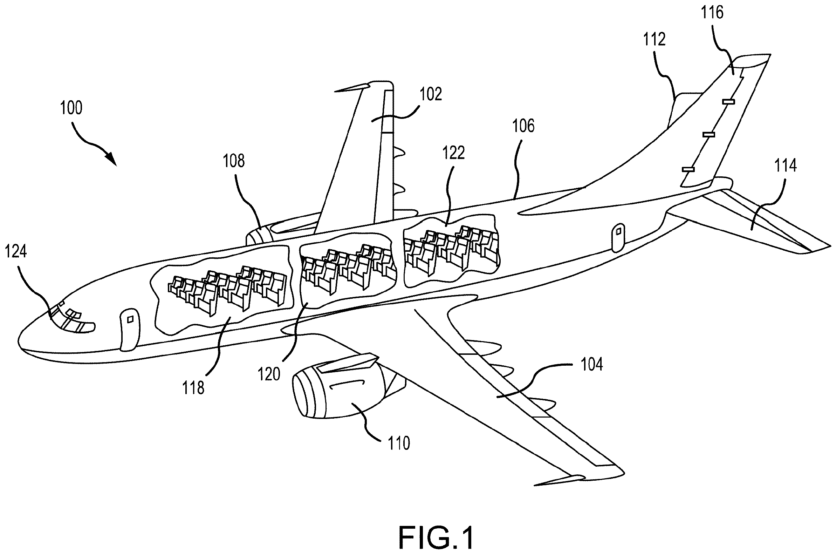

Referring now to FIG. 1, in accordance with various embodiments, an aircraft 100 and various sections within the aircraft is illustrated. The aircraft 100 is an example of a passenger or transport vehicle in which control systems may be implemented in accordance with various embodiments. In various embodiments, the aircraft 100 has a starboard wing 102 and a port wing 104 attached to a fuselage 106. In various embodiments, the aircraft 100 also includes a starboard engine 108 connected to the starboard wing 102 and a port engine 110 connected to the port wing 104. In various embodiments, the aircraft 100 also includes a starboard horizontal stabilizer 112, a port horizontal stabilizer 114, and a vertical stabilizer 116. In various embodiments, the aircraft 100 also includes various cabin sections, including, for example, a first cabin section 118, a second cabin section 120, a third cabin section 122, and a pilot cabin 124.

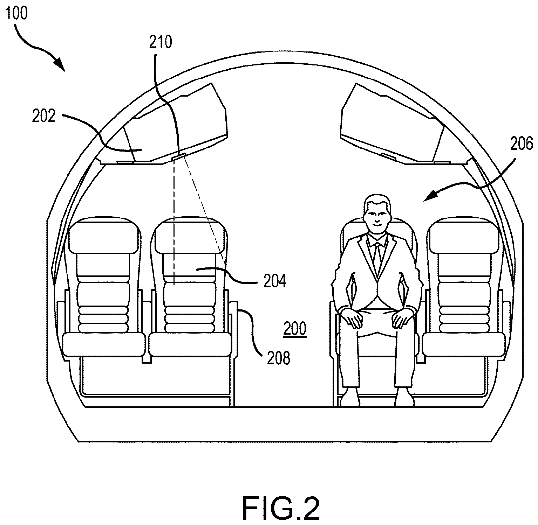

Referring now to FIG. 2, in accordance with various embodiments, a cabin of an aircraft 100 is illustrated. Cabin 200 may be a cabin such as the first cabin section 118, the second cabin section 120, or the third cabin section 122 of FIG. 1. In various embodiments, the cabin 200 may include overhead storage bins 202, passenger seats 204 for supporting passengers 206, armrest 208, lavatory surfaces, PEDs, and other structures/surfaces. In various embodiment, the cabin 200 may include passenger service units (PSUs) 210 that control various functions for passengers in the cabin 200, such as reading lighting, air conditioning, and a flight attendant call signal.

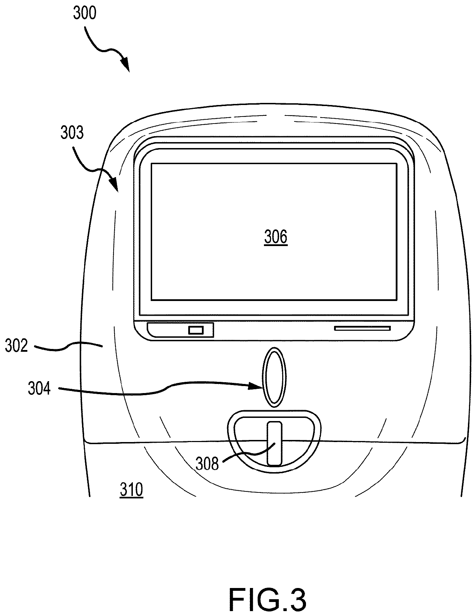

Referring now to FIG. 3, in accordance with various embodiments, a passenger seat with a detection device and an entertainment system for use in a cabin of an aircraft is illustrated. In various embodiments, the passenger seat 300, such as passenger seats 204 of FIG. 2, includes a seat back 302 with a seat assembly 303 onto which a detection device 304 and an entertainment system 306 may be located. In various embodiments, the detection device 304 and the entertainment system 306 are disposed proximate a latch 308. "Proximate" as disclosed herein refers to being spaced apart from, in accordance with various embodiments. The latch 308 may be configured to release a tray 310, in accordance with various embodiments. In this regard, latch 308 may retrain the tray 310 in a closed state in response to the latch 308 being in a first position as illustrated. In various embodiments, by rotating the latch 308, the tray 310 may be released and transition into an open state. Although illustrated as being configured to rotate, the latch 308 is not limited in this regard. For example, the latch 308 could include a push release, an automated release, or the like.

In various embodiments, the seat assembly 303 includes the detection device 304 and the entertainment system 306. In various embodiments, the detection device 304 may include a camera to capture images, infrared projectors and/or cameras to capture infrared images, and/or a radio frequency identification (RFID) reader to enable detection the presence of a food dish, i.e. a food plate, among others. Accordingly, although illustrated as including a single detection device 304, the present disclosure is not limited in this regard. For example, a seat assembly 303 having a plurality of detection devices 304 is within the scope of this disclosure. In various embodiments, the entertainment system 306 is a graphical user interface (GUI) to capture the input signals from the user. The entertainment system 306 may be configured to display various media, such as movies, games, etc. In various embodiments, the detection device 304 and the entertainment system 306 are electrically coupled to a power source and a controller.

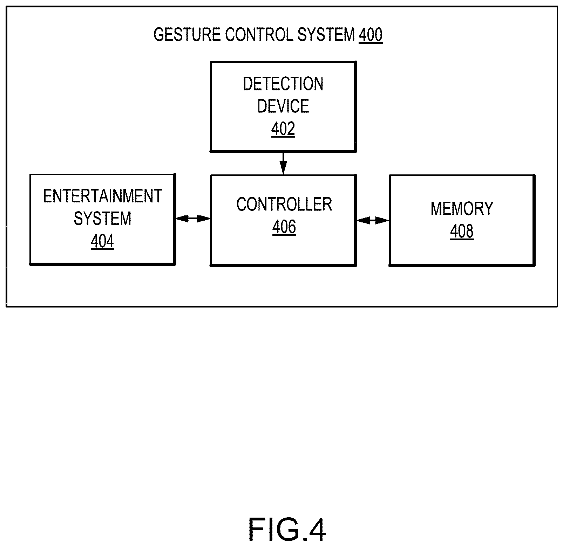

Referring now to FIG. 4, in accordance with various embodiments, a food quality and preference feedback system for obtaining feedback regarding food served to passengers is illustrated. In various embodiments, the food quality and preference feedback system 400 may include one or more detection devices 402, an entertainment system 404, a controller 406, and a memory 408. In various embodiments, the controller 406 may include a logic device such as one or more of a central processing unit (CPU), an accelerated processing unit (APU), a digital signal processor (DSP), a field programmable gate array (FPGA), an application specific integrated circuit (ASIC), or the like. In various embodiments, the controller 406 may further access the memory 408 that may be any non-transitory memory known in the art. The memory 408 may store instructions usable by the logic device to perform operations as described herein. In various embodiments, the controller 406 may be electrically coupled to the one or more detection devices 402 and may be configured to receive detected information from the one or more detection devices 402. In various embodiments, the controller 406 may be electrically coupled to the entertainment system 404 and may be configured to send and receive information from the entertainment system 404.

In various embodiments, prior to a food dish being presented to a passenger, the controller 406 may be configured to prompt the passenger, via entertainment system 404, for a response as to whether the passenger would like to participate in a food quality assessment. In various embodiments, the prompt may include that the one or more detection devices 402 will monitor a food dish positioned proximate to the passenger, such as on a tray in front of the passenger. In various embodiments, response to the passenger indicating a willingness to participate in the food quality assessment, the controller 406 may be configured to enable the one or more detection devices 402 to continuously capture images of the food dish during a time that the food dish, i.e. food on a plate, is present proximate to the passenger. In that regard, in various embodiments, the one or more detection devices 402 may be a camera or other visual sensing device that may capture images of a food dish that may be positioned proximate to the passenger.

In various embodiments, the controller 406 may be configured to identify a presence of a food dish proximate to the passenger using an RFID reader that detects a food plate, with an RFID tag, being placed proximate to the passenger. In various embodiments, the controller 406 may further be configured to classify the particular food on the plate by comparing the images captured by the one or more detection devices 402 to images stored in memory 408 in order to identify, for example, whether the main course is beef, chicken, fish, or pasta, among other, whether the side dish is a particular vegetable or salad, among others, and whether the bread is a dinner roll or slice of bread, among others. In that regard, the controller may be configured to be a computer vision system or deep learning based neural network. The controller 406 may identify an amount of food and a respective type of food prior to the start of food consumption. In that regard, as food is consumed and leaves the plate, a percentage of consumption may be derived since the starting amount of food has been determined. The amount of food may be measured or estimated in mass and/or volume.

In various embodiments, as the passenger consumes the food on the plate, the controller 406 may be configured to determine whether the food is mostly consumed, partially consumed, or mostly unconsumed. In various embodiments, mostly consumed may be considered to be between 75% and 100% of the food originally on the plate. In various embodiments, mostly consumed may be considered to be between 80% and 100% of the food originally on the plate. In various embodiments, mostly consumed may be considered to be between 85% and 100% of the food originally on the plate. In various embodiments, partially consumed may be considered to be between 25% and 75% of the food originally on the plate. In various embodiments, partially consumed may be considered to be between 20% and 80% of the food originally on the plate. In various embodiments, partially consumed may be considered to be between 15% and 85% of the food originally on the plate. In various embodiments, mostly unconsumed may be considered to be between 0% and 25% of the food originally on the plate. In various embodiments, mostly unconsumed may be considered to be between 0% and 20% of the food originally on the plate. In various embodiments, mostly unconsumed may be considered to be between 0% and 15% of the food originally on the plate.

In various embodiments, responsive the controller 406 determining that the food on the plate is mostly consumed, the controller 406 may be configured to record the food that was on the plate along with a record of the food being mostly consumed. In various embodiments, responsive to the controller 406 determining that the food on the plate is either partially consumed or mostly unconsumed, the controller 406 may be configured to prompt the passenger, via the entertainment system 404, for further feedback from the passenger. In various embodiments, the further feedback may include another food, other than the food the passenger received, that the passenger may have preferred, i.e. main course of beef, chicken, fish, or pasta, among other, a side dish of a particular vegetable or salad, among others, and a bread of a dinner roll or slice of bread, among others. In addition to the food identity, feedback on various food preparations/recipes may be solicited. In that regard, though a passenger may prefer a particular food, i.e. chicken, the passenger may indicate that the preparation presented was not to the passenger's liking, i.e. prefers fried chicken over roast chicken. In that regard, though a passenger may prefer a particular food, i.e. beef, the passenger may indicate that the preparation presented was not to the passenger's liking, i.e. prefers roast beef over beef stew. Additionally, in various embodiments, the controller 406 may be configured to request feedback pertaining to a citizenship, a nationality, and/or ethnicity of the passenger. In various embodiments, the controller 406 may be configured to record the food that was on the plate, a record of the food being either partially consumed or mostly unconsumed, a food that the passenger would have preferred, and a citizenship, a nationality, and/or ethnicity of the passenger.

In various embodiments, the controller 406 may be configured to provide statistics associated with the information, by passenger, based on the food that was served, a record of the food being either mostly consumed, partially consumed, or mostly unconsumed, and, responsive to the food being partially consumed or mostly unconsumed, a food that the passenger would have preferred and a citizenship, a nationality, and/or ethnicity of the passenger. In various embodiments, the controller 406 may be configured to store the statistics and conveys the stored information and statistics to the airline once the aircraft has landed without intervention from flight crew members so that ground staff may make modifications to menus and food quality.

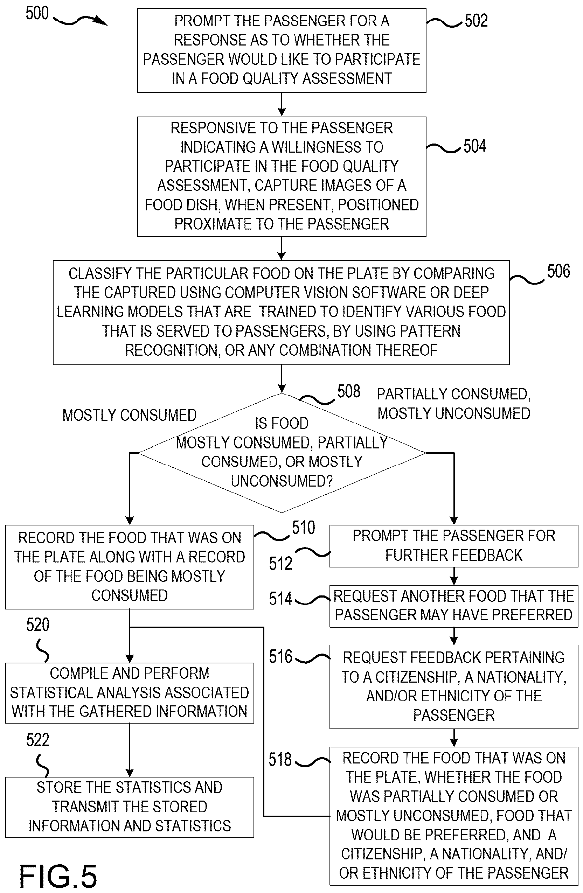

Referring now to FIG. 5, in accordance with various embodiments, a method for obtaining feedback regarding food served to passengers is illustrated. The method 500 may be performed by a controller, such as controller 406 described above with respect to FIG. 4. At block 502, the controller may be configured, prior to a food dish being presented to a passenger, to prompt the passenger, via an entertainment system, for a response as to whether the passenger would like to participate in a food quality assessment. In various embodiments, the prompt may include that the one or more detection devices will monitor a food dish positioned proximate to the passenger, such as on a tray in front of the passenger. At block 504, responsive to the passenger indicating a willingness to participate in the food quality assessment and the presence of a food dish proximate to the passenger, the controller may be configured to enable the one or more detection devices to continuously capture images of the food dish during a time that the food dish, i.e. food on a food plate, is present proximate to the passenger.

At block 506, the controller may further be configured to classify the particular food on the plate by comparing the images captured by the one or more detection devices, by using computer vision software or deep learning models that are trained to identify various food that is served to passengers, by using pattern recognition of images of food stored in a memory of the one or more detection devices, or any combination thereof, for example, whether the main course is beef, chicken, fish, or pasta, among other, whether the side dish is a particular vegetable or salad, among others, and whether the bread is a dinner roll or slice of bread, among others. At block 508, as the passenger consumes the food on the plate, the controller may be configured to determine whether the food is mostly consumed, partially consumed, or mostly unconsumed. This determination of mostly consumed, partially consumed or mostly unconsumed is done by using computer vision software or deep learning models that are trained to identify various food that is served to passengers, by using pattern recognition of the images of food stored in a memory of the one or more detection devices, or any combination thereof.

At block 510, responsive the controller determining that the food on the plate is mostly consumed, the controller may be configured to record the food that was on the plate along with a record of the food being mostly consumed. At block 512, responsive the controller determining that the food on the plate is either partially consumed or mostly unconsumed, the controller may be configured to prompt the passenger, via the entertainment system, for further feedback from the passenger. At block 514, the controller may be configured to request information pertaining to another food, other than the food the passenger received, that the passenger may have preferred, i.e. main course of beef, chicken, fish, or pasta, among other, a side dish of a particular vegetable or salad, among others, and a bread of a dinner roll or slice of bread, among others. At block 516, the controller may be configured to request feedback pertaining to a citizenship, a nationality, and/or ethnicity of the passenger. Some of the passenger information may be fetched from passenger info, if available, and provided prefilled for passenger to modify. At block 518, the controller may be configured to record the food that was on the plate, a record of the food being either partially consumed or mostly unconsumed, a food that the passenger would have preferred, and a citizenship, a nationality, and/or ethnicity of the passenger.

At block 520, the controller may be configured to compile and perform statistical analysis associated with the gathered information, by passenger, based on the food that was served, a record of the food being either mostly consumed, partially consumed, or mostly unconsumed, and, responsive to the food being partially consumed or mostly unconsumed, a food that the passenger would have preferred and a citizenship, a nationality, and/or ethnicity of the passenger. At block 522, the controller may be configured to store the statistics and transmit the stored information and statistics to the airline once the aircraft has landed without intervention from flight crew members so that ground staff may make modifications to menus and food quality.

Benefits and other advantages have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, and any elements that may cause any benefit or advantage to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C.

Systems, methods, and apparatus are provided herein. In the detailed description herein, references to "one embodiment," "an embodiment," "various embodiments," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Numbers, percentages, or other values stated herein are intended to include that value, and also other values that are about or approximately equal to the stated value, as would be appreciated by one of ordinary skill in the art encompassed by various embodiments of the present disclosure. A stated value should therefore be interpreted broadly enough to encompass values that are at least close enough to the stated value to perform a desired function or achieve a desired result. The stated values include at least the variation to be expected in a suitable industrial process, and may include values that are within 10%, within 5%, within 1%, within 0.1%, or within 0.01% of a stated value. Additionally, the terms "substantially," "about," or "approximately" as used herein represent an amount close to the stated amount that still performs a desired function or achieves a desired result. For example, the term "substantially," "about," or "approximately" may refer to an amount that is within 10% of, within 5% of, within 1% of, within 0.1% of, and within 0.01% of a stated amount or value.

Furthermore, no element, component, or method step in the present disclosure is intended to be dedicated to the public regardless of whether the element, component, or method step is explicitly recited in the claims. As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

Finally, it should be understood that any of the above-described concepts can be used alone or in combination with any or all of the other above-described concepts. Although various embodiments have been disclosed and described, one of ordinary skill in this art would recognize that certain modifications would come within the scope of this disclosure. Accordingly, the description is not intended to be exhaustive or to limit the principles described or illustrated herein to any precise form. Many modifications and variations are possible in light of the above teaching.

## Claims

1. A system for obtaining feedback regarding food served to passengers, the system comprising:
a detection device (304, 404); and
a controller (406), wherein the controller (406) is configured to:
capture a plurality of images of food of a food plate from the detection device (304, 404);
classify the food on the food plate;
responsive to the food plate being removed from view of the detection device (304, 404), determine, using a prior received image, whether the food is mostly consumed, partially consumed, or mostly unconsumed;
responsive to determining that the food was either mostly consumed, partially consumed, or mostly unconsumed, store, in a memory, information pertaining to the food along with a record of the food being either mostly consumed, partially consumed, or mostly unconsumed as per the determination; and
transmit the information to at least one other computer in order for modifications to be made to menus and food quality as per the information.

2. The system of claim 1, further comprising:
an entertainment system, wherein the controller (406) is configured to:
prior to capturing the plurality of images of the food of the food plate from the detection device (304, 404), prompt, via the entertainment system, a passenger associated with the detection device (304, 404) for a response as to whether the passenger would like to participate in a food quality assessment; and
responsive to the passenger indicating a willingness to participate in the food quality assessment, capture the plurality of images of the food of the food plate from the detection device (304, 404).

3. The system of claim 2, wherein the controller (406) is configured to:
responsive to the food being either partially consumed or mostly unconsumed, prompt the passenger, via the entertainment system, for additional information pertaining to another food, other than the food the passenger received, that the passenger would have preferred.

4. The system of claim 3, wherein the controller (406) is configured to:
responsive to the food being either partially consumed or mostly unconsumed, prompt the passenger, via the entertainment system, for further information pertaining to a citizenship, a nationality, and/or ethnicity of the passenger.

5. The system of claim 4, wherein the controller (406) is configured to:
transmit the additional information and the further information to the at least one other computer in order for modifications to be made to the menus and the food quality as per the additional information and the further information.

6. The system of any preceding claim, wherein the detection device (304, 404) only captures the plurality of images of the food of the food plate in response to the detection device (304, 404) determining a presence of the food plate proximate to a passenger, and optionally wherein the presence of the food plate is determined by detecting a radio frequency identification (RFID) tag on the food plate.

7. The system of any preceding claim, wherein the controller (406) is configured to classify the food on the food plate by comparing the plurality of images to images stored in the memory, by using computer vision software or deep learning models that are trained to identify various food that is served to passengers, or by using pattern recognition.

8. The system of any preceding claim, wherein the detection device (304, 404) is at least one of a camera or a radio frequency identification (RFID) reader.

9. The system of any preceding claim, wherein the controller (406) is further configured to:
perform statistical analysis using the information prior to transmitting the information to the at least one other computer in order for modifications to be made to the menus and the food quality as per the information; and
transmit statistics associated with the statistical analysis to the at least one other computer in order for modifications to be made to the menus and the food quality as per the information and the statistics.

10. A method for obtaining feedback regarding food served to passengers, the method comprising:
capturing, by a controller (406), a plurality of images of food of a food plate from a detection device (304, 404);
classifying, by the controller (406), the food on the food plate;
responsive to the food plate being removed from view of the detection device (304, 404), determine, by the controller (406) and using a prior received image, whether the food is mostly consumed, partially consumed, or mostly unconsumed;
responsive to determining that the food was either mostly consumed, partially consumed, or mostly unconsumed, storing, by the controller (406) and in a memory, information pertaining to the food along with a record of the food being either mostly consumed, partially consumed, or mostly unconsumed as per the determination; and
transmitting, by the controller (406), the information to at least one other computer in order for modifications to be made to menus and food quality as per the information.

11. The method of claim 10, further comprising:
prior to capturing the plurality of images of the food of the food plate from the detection device (304, 404), prompting, by the controller (406) and via an entertainment system, a passenger associated with the detection device (304, 404) for a response as to whether the passenger would like to participate in a food quality assessment; and
responsive to the passenger indicating a willingness to participate in the food quality assessment, capturing, by the controller (406), the plurality of images of the food of the food plate from the detection device (304, 404), and optionally further comprising:
responsive to the food being either partially consumed or mostly unconsumed, prompting, by the controller (406) and via the entertainment system, the passenger for additional information pertaining to another food, other than the food the passenger received, that the passenger would have preferred, and optionally further comprising:
responsive to the food being either partially consumed or mostly unconsumed, prompting, by the controller (406) and via the entertainment system, the passenger for further information pertaining to a citizenship, a nationality, and/or ethnicity of the passenger, and optionally further comprising:
transmitting, by the controller (406), the additional information and the further information to the at least one other computer in order for modifications to be made to the menus and the food quality as per the additional information and the further information.

12. The method of claim 10 or 11, wherein the detection device (304, 404) only captures the plurality of images of the food of the food plate in response to the detection device (304, 404) determining a presence of the food plate proximate to a passenger, and optionally wherein the presence of the food plate is determined by detecting a radio frequency identification (RFID) tag on the food plate.

13. The method of any of claims 10-12, wherein classifying the food on the food plate comprises:
classifying, by the controller (406), the food on the food plate by comparing the plurality of images to images stored in the memory, by using computer vision software or deep learning models that are trained to identify various food that is served to passengers, or by using pattern recognition.

14. The method of any of claims 10-13, wherein the detection device (304, 404) is at least one of a camera or a radio frequency identification (RFID) reader.

15. The method of any of claims 10-14, further comprising:
performing, by the controller (406), statistical analysis using the information prior to transmitting the information to the at least one other computer in order for modifications to be made to the menus and the food quality as per the information; and
transmitting, by the controller (406), statistics associated with the statistical analysis to the at least one other computer in order for modifications to be made to the menus and the food quality as per the information and the statistics.
